# EUROPÄISCHE PATENTSCHRIFT

(11) **EP 3 912 325 B1**
(45) Veröffentlichungstag und Bekanntmachung des Hinweises auf die Patenterteilung: **06.07.2022**
(21) Anmeldenummer: 20797727.3
(22) Anmeldetag: 27.10.2020
(51) Int. Cl.: H04L 9/40, H04L 67/12

(54) **VERFAHREN UND STEUERGERÄT ZUM DETEKTIEREN EINES UNAUTORISIERTEN DATENVERKEHRS IN EINEM PAKETORIENTIERTEN DATENNETZWERK EINES KRAFTFAHRZEUGS SOWIE ENTSPRECHENDES KRAFTFAHRZEUG**
METHOD AND CONTROL UNIT FOR DETECTING UNAUTHORISED DATA TRAFFIC IN A PACKET-ORIENTED DATA NETWORK OF A MOTOR VEHICLE, AND CORRESPONDING MOTOR VEHICLE
PROCÉDÉ ET UNITÉ DE COMMANDE POUR DÉTECTER UN TRAFIC DE DONNÉES NON AUTORISÉ DANS UN RÉSEAU DE DONNÉES ORIENTÉ PAQUETS D'UN VÉHICULE AUTOMOBILE, ET VÉHICULE AUTOMOBILE CORRESPONDANT

(30) Priorität: 04.11.2019 DE 102019129628
(43) Veröffentlichungstag der Anmeldung: 24.11.2021
(73) Patentinhaber: Audi AG, 85045 Ingolstadt (DE)
(72) Erfinder: CORBETT, Christopher, 85101 Lenting (DE); BAUMANN, Felix, 91795 Dollnstein (DE)
(86) Internationale Anmeldenummer: PCT/EP2020/080093
(87) Internationale Veröffentlichungsnummer: WO 2021/089359

(56) Entgegenhaltungen:
- EP-A1- 3 111 614
- EP-A1- 3 373 553
- US-A1- 2019 104 108
- Peter Dorfinger ET AL: "Entropy Estimation for Real-Time Encrypted Traffic Identification (Short Paper)" In: "LECTURE NOTES IN COMPUTER SCIENCE", 1. Januar 2011 (2011-01-01), Springer Berlin Heidelberg, Berlin, Heidelberg, XP055127221, ISSN: 0302-9743 ISBN: 978-3-54-045234-8 Bd. 6613, Seiten 164-171, DOI: 10.1007/978-3-642-20305-3_14, Abstract, Section 3, Section 4.1

## Beschreibung

Die Erfindung betrifft ein Verfahren zum Detektieren eines unautorisierten Datenverkehrs in einem paketorientierten Datennetzwerk eines Kraftfahrzeugs. Ein solcher unautorisierter Datenverkehr kann sich ergeben, wenn ein Steuergerät des Kraftfahrzeugs durch einen Hackerangriff manipuliert wird und/oder ein zusätzlicher, vom Hersteller des Kraftfahrzeugs nicht vorgesehener Computer an das Datennetzwerk angeschlossen wird. Zu der Erfindung gehören auch ein Steuergerät, mittels welchem in einem Kraftfahrzeug das Verfahren durchgeführt werden kann, sowie ein Kraftfahrzeug mit einem solchen Steuergerät.

In einem Kraftfahrzeug kann zusätzlich oder alternativ zu einem Datenbus auch ein paketorientiertes Datennetzwerk, beispielsweise ein Ethernet-Netzwerk, bereitgestellt sein. Anders als in einem Datenbus lassen sich über ein paketorientiertes Datennetzwerk auch Kommunikationsverbindungen herstellen, die vom Hersteller des Kraftfahrzeugs gemäß der Fahrzeugspezifikation nicht vorgesehen sind. Damit kann es aber einem Benutzer mit Manipulationsabsichten ermöglicht werden, ausgehend von einem bereits manipulierten Steuergerät des Kraftfahrzeugs oder durch Anschließen eines zusätzlichen Computers an das Datennetzwerk schädliche Daten, die den fehlerfreien Betrieb des Kraftfahrzeugs stören, über eine neu geschaffene Kommunikationsverbindung zu einem weiteren Steuergerät in das Kraftfahrzeugs einzuschleusen. Aber selbst wenn bei einem solchen Hackerangriff nur eine bereits gemäß Fahrzeugspezifikation vorgesehene Kommunikationsverbindung zwischen zwei Steuergeräten genutzt werde kann, ist es anders als bei einem Datenbus in einem paketorientierten Datennetzwerk immer noch möglich, mehr Freiheitsgrade bei der Ausgestaltung der sogenannten Payload (Nutzdatenanteil) in einem Datenpaket auszunutzen, um Schaddaten in ein Steuergerät des Kraftfahrzeug zu übertragen.

In einem paketorientierten Datennetzwerk eines Kraftfahrzeugs mit paketorientiertem Datenverkehr, insbesondere einem Ethernet-Netzwerk, ist eine Erkennung von manipulativen Angriffen oder Hackerangriffen daher wünschenswert.

Eine Überwachung des Datenverkehrs in einem Datennetzwerk eines Kraftfahrzeugs ist beispielsweise aus der DE 10 2018 122 152 A1, der EP 3373553 A1, der US 2018/0083914 A1 und der WO 2016/055730 A1 bekannt. Die bekannten Lösungen bieten aber nicht den Doppelschutz, in einem Datennetzwerk sowohl neue, gemäß Fahrzeugspezifikation nicht vorgesehene Kommunikationsverbindungen als auch über gemäß Fahrzeugspezifikation zulässige Kommunikationsverbindungen ausgeführte Manipulationen zu detektieren. Die Detektion solchen unautorisierten (nicht in der Fahrzeugspezifikation vorgesehenen) Datenverkehrs ist aber für die Sicherstellung eines ungestörten Betriebs des Kraftfahrzeugs wünschenswert.

Das Dokument US 2019/104108 A1 beschreibt ein Gateway für ein Datennetzwerk eines Kraftfahrzeugs, in welchem die einzelnen Datenpakete des Datenverkehrs zum einen dahingehend überprüft werden, ob eine gültige Verbindung zwischen einem zugelassenen Sender und einem zugelassenen Empfänger vorliegt, und ob zum anderen im Falle einer Verbindung von einem Update-Server zu einer Applikation des Kraftfahrzeugs ausschließlich eine verschlüsselte Verbindung genutzt wird.

Eine wissenschaftliche Veröffentlichung von Dorfinger et al. (Peter Dorfinger, Georg Panholzer, Wolfgang John, "Entropy Estimation for Real-Time Encrypted Traffic Identification (Short Paper)", LECTURE NOTES IN COMPUTER SCIENCE, 1. Januar 2011, Springer Berlin Heidelberg, Berlin, Heidelberg, ISSN: 0302-9743, ISBN: 978-3-54-045234-8, Bd. 6613, Seiten 164-171, DOI: 1 0.1007/978-3-642-20305-3_14) ist die Verwendung des Entropie-Maßes bei der Analyse von Datenverkehr beschrieben.

Das Dokument EP 3 373 553 A1 beschreibt einen Schutz eines Kraftfahrzeug-Datennetzwerks gegen Cyber-Attacken.

Der Erfindung liegt die Aufgabe zugrunde, in einem Kraftfahrzeug unautorisierten Datenverkehr in einem paketorientierten Datennetzwerk zu detektieren (sogenannte Intrusion-Detection).

Die Aufgabe wird durch die Gegenstände der unabhängigen Patentansprüche gelöst. Vorteilhafte Ausführungsformen ergeben sich durch die abhängigen Patentansprüche, die folgende Beschreibung sowie die Figuren.

Durch die Erfindung ist ein Verfahren zum Detektieren eines unautorisierten Datenverkehrs in einem paketorientierten Datennetzwerk eines Kraftfahrzeugs bereitgestellt. Das Verfahren kann durch eine Prozessorschaltung durchgeführt werden, die beispielsweise in einem Steuergerät des Kraftfahrzeugs bereitgestellt sein kann. Das Verfahren geht davon aus, dass die Prozessorschaltung mit dem Datennetzwerk gekoppelt ist, um aus dem Datennetzwerk zumindest ein Datenpaket selbst empfangen oder zumindest mitlesen zu können. In dem Verfahren wird also zumindest ein Datenpaket, das in dem Datennetzwerk übertragen wird, aus dem Datennetzwerk ausgelesen. Das Datenpaket kann in der besagten Weise dabei an die Prozessorschaltung oder ein anderes Empfängergerät adressiert sein. Es gilt nun festzustellen, ob ein solches Datenpaket unautorisierten Datenverkehr darstellt, also Datenverkehr, der gemäß einer vorbekannten Fahrzeugspezifikation, wie sie beispielsweise der Hersteller des Kraftfahrzeugs vorgesehen hat, nicht vorhanden sein dürfte oder sollte.

Für jedes ausgelesene Datenpaket werden hierzu jeweils die folgenden Schritte durchgeführt. Durch die Prozessorschaltung werden Headerdaten, also Daten eines sogenannten Paketheaders, mittels einer ersten Prüfroutine daraufhin überprüft, ob die durch die Headerdaten beschriebenen Verbindungsinformationen eine Kommunikationsverbindung angegeben, die für den Betrieb des Kraftfahrzeugs zugelassen ist. Dies ist möglich, da in den Headerdaten in der Regel die Kommunikationsverbindung eindeutig identifiziert ist, beispielsweise durch eine Kombination aus Senderadresse und Empfängeradresse und/oder ein Sendeport und/oder ein Empfangsport und/oder eine Sendeapplikation und/oder eine Empfangsapplikation. Welche Kommunikationsverbindung dabei zugelassen ist, kann der besagten Fahrzeugspezifikation entnommen werden, da bei der Konstruktion des Kraftfahrzeugs schon vor dem eigentlichen Betrieb des Kraftfahrzeugs bekannt ist und mittels Programmierdaten festgelegt wird, welches Steuergerät an welches andere Steuergerät überhaupt eine Kommunikationsverbindung betreiben wird. Es können in dem Kraftfahrzeug mehrere zugelassene Kommunikationsverbindungen beispielsweise durch Spezifikationsdaten definiert sein oder beschrieben sein. Anhand der Headerdaten kann nun die Prozessorschaltung erkennen, ob das aktuell ausgelesene Datenpaket zu einer für den Betrieb des Kraftfahrzeugs zugelassenen Kommunikationsverbindung gehört.

Falls das Datenpaket als zu einer solchen zugelassenen Kommunikationsverbindung gehörig erkannt wird, werden in einem zweiten Schritt Payloaddaten des Datenpakets, also die Nutzdaten, die von den Headerdaten verschieden sind und in der Regel nach den Headerdaten gesendet werden, mittels einer zweiten Prüfroutine daraufhin überprüft, ob Datenwerte der Payloaddaten ein Werteprofil aufweisen, das für die Kommunikationsverbindung typisch oder vorgesehen ist. Die Payloaddaten können beispielsweise als eine Reihe von einzelnen Bytes gesehen werden, wobei jedes Byte dann einen Zahlenwert von 0 bis 255 (8 Bits) repräsentieren kann. Wird die Kommunikationsverbindung in der für den Betrieb des Kraftfahrzeugs vorgesehenen Weise, also spezifikationsgemäß, genutzt, so werden erwartungsgemäß die einzelnen Bytes der Payloaddaten jeweils einen Wert in einem erwartungsgemäßen oder typischen Werteintervall aufweisen. Die Zusammenfassung der Werte aller Payloaddaten ergibt das Werteprofil, also eine Wertangabe beispielsweise pro Byte. Entspricht dieses Werteprofil insgesamt dem für die Kommunikationsverbindung vorgesehenen Sollprofil oder einem von mehreren möglichen Sollprofilen, so kann das Datenpaket als autorisiert oder für den Betrieb des Kraftfahrzeugs typisch oder vorgesehen angesehen werden. Welcher Teil eines Datenpakets zu den Headerdaten und welcher zu den Payloaddaten gehört und damit der ersten oder der zweiten Prüfroutine zugeführt wird, kann vom Fachmann festgelegt werden. Die Headerdaten und die Payloaddaten können disjunkt sein oder sich ganz oder teilweise überschneiden. Die Einteilung in Headerdaten und Payloaddaten kann sich aus dem verwendeten Kommunikationsprotokoll ergeben. Die Payloaddaten können die für die empfangende Applikation (Anwendungsprogramm im Empfängergerät) vorgesehenen Daten sein, die Headerdaten die für den Protokollstack des Empfängergerät vorgesehenen Daten (Zwischenschichten des ISO/OSI-Referenzmodells).

Falls aber einer der Fälle eintritt, dass für das Datenpaket eine zugelassene Kommunikationsverbindung oder ein zugelassenes Werteprofil fehlt, wird durch die Prozessorschaltung ein Detektionssignal erzeugt, welches das Datenpaket als unautorisierten Datenverkehr kennzeichnet oder signalisiert. Anhand eines solchen Detektionssignals kann dann beispielsweise eine Schutzmaßnahme ausgelöst werden, beispielsweise eine Betriebsunterbrechung des Kraftfahrzeugs. Die Schutzmaßnahme kann beispielsweise in Abhängigkeit davon ausgewählt werden, welche Steuergeräte von dem Datenpaket betroffen sind.

Das beschriebene Verfahren lässt sich nicht nur in einer einzelnen zentralen Komponente (z.B. einem Switch oder einem Router oder einem Gateway) im Datennetzwerk eines Kraftfahrzeugs anwenden, sondern es kann zusätzlich oder alternativ dazu auch in den einem oder mehreren Endgeräten / Steuergeräten implementiert und dort angewendet werden. Hierdurch kann die Abdeckung nach Bedarf skaliert und/oder örtlich festgelegt werden. Daher kann das Verfahren also allgemein von einer einzelnen Prozessorschaltung oder durch mehrere Prozessorschaltungen jeweils individuell durchgeführt werden.

Durch die Erfindung ergibt sich der Vorteil, dass in dem paketorientierten Datennetzwerk weder über eine neu geschaffene oder angelegte Kommunikationsverbindung noch über eine schon bereits bestehende, autorisierte Kommunikationsverbindung Schaddaten in das Kraftfahrzeug eingeschleust werden können, welche den Betrieb des Kraftfahrzeugs stören könnten.

Das Werteprofil umfasst in der besagten Weise, dass die Payloaddaten in Datensegmente, beispielsweise einzelne Bytes, eingeteilt werden und für jedes Datensegment ein durch die Bits dieses Datensegments definierter Zahlenwert ermittelt wird und eine jeweilige absolute oder relative Häufigkeit der in den Datensegmenten vorkommenden Zahlenwerte gezählt wird. Es wird also in dieser Ausführungsform unabhängig von einer Position des jeweiligen Datensegments in den Payloaddaten der Zahlenwert, der durch die Bits dieses Datensegments repräsentiert wird, ermittelt und in einem Histogramm die absolute oder relative Häufigkeit der vorkommenden Zahlenwerte in den Payloaddaten des aktuellen Datenpakets ermittelt. Hierdurch ergibt sich der Vorteil, dass zum Überprüfen eines Datenpakets lediglich ein Zähler pro möglichem Zahlenwert verwaltet oder implementiert werden muss, was die Analyse des Datenpakets in kurzer Zeit ermöglicht, sodass aufeinanderfolgende Datenpakete im Datennetzwerk ohne Unterbrechung überprüft werden können.

Gemäß der Erfindung umfasst die erste Prüfroutine (mittels welcher überprüft wird, ob das Datenpaket überhaupt zu einer zulässigen Kommunikationsverbindung gehört), das vorbestimmte Datenelement oder zumindest ein vorbestimmtes Datenelement der Headerdaten ausgewählt wird und ein Hashwert oder Prüfsummenwert über jedes ausgewählte Datenelement berechnet wird. Mit anderen Worten werden alle ausgewählten Datenelemente zusammengefasst und zu den zusammengefassten Datenelementen der Hashwert oder Prüfsummenwert berechnet. Unabhängig davon, wie viele Datenelemente aus den Headerdaten ausgewählt werden, werden diese zu einem Hashwert oder Prüfsummenwert kombiniert. Hierdurch lässt sich beispielsweise die Auswahl der Datenelemente anpassen oder umkonfigurieren, ohne dass der Rest der Prüfroutine angepasst werden müsste, da weiterhin ein Hashwert oder ein Prüfsummenwert mit gleichbleibender Länge weiter verarbeitet werden muss.

Es wird überprüft, ob der berechnete Hashwert mit einem Soll-Hashwert übereinstimmt, wobei für jede zugelassene Kommunikationsverbindung jeweils zumindest ein Soll-Hashwert in einem Datenspeicher bereitgehalten wird. Pro Kommunikationsverbindung kann also ein oder mehr als ein Soll-Hashwert bereitgestellt sein, um die Kommunikationsverbindung oder mehrere Ausführungsformen der Kommunikationsverbindung durch jeweils einen Soll-Hashwert zu beschreiben. Es ist somit auch bei Verwendung mehrerer unterschiedlicher Datenelemente aus den Headerdaten nur ein einzelner Vergleich zwischen Hashwert/Prüfsummenwert und jedem möglichen Soll-Hashwert vorzunehmen. Jeder Hashwert/Prüfsummenwert repräsentiert eine bestimmte Kombination aus Datenelementen, sodass durch die Überprüfung eines einzelnen Hashwerts/Prüfsummenwerts die gesamte Kombination geprüft wird. Dies ist in vorteilhafter Weise effizient.

Gemäß der Erfindung umfasst die erste Prüfroutine, dass mittels eines Cuckoo-Filters und/oder mittels eines Bloom-Filters geprüft wird. Insbesondere der beschriebene Hashwert oder Prüfsummenwert wird mittels eines oder beider der besagten Filter überprüft. Hierdurch ergibt sich der Vorteil, dass kein Zahlenvergleich mit einem oder mehreren Soll-Hashwerten notwendig ist, sondern die Übereinstimmung sich ergibt, wenn die Filterung mittels Cuckoo-Filter und/oder Bloom-Filter ein entsprechendes Filterergebnis ergibt.

Die Erfindung umfasst auch Ausführungsformen, durch die sich zusätzliche Vorteile ergeben.

In einer Ausführungsform umfasst das besagte Werteprofil, dass für das Datenpaket anhand der Häufigkeiten der Zahlenwerte ein Entropiewert berechnet wird und für jede zugelassene Kommunikationsverbindung ein jeweiliger spezifischer Sollentropiewert in einem Datenspeicher bereitgehalten wird und nur falls der berechnete Entropiewert von dem Sollentropiewert derjenigen Kommunikationsverbindung, zu welcher das Datenpaket gehört, um weniger als einen vorbestimmten Toleranzwert abweicht, das Werteprofil als zulässig erkannt wird. Für die Payloaddaten des Datenpakets wird anhand des Entropiewerts in vorteilhafter Weise nur ein einzelner Wert berechnet, der zu überprüfen ist. Hierdurch kann die Überprüfung mit wenigen Rechenschritten erfolgen. Da die Payloaddaten für den Fall überprüft werden, dass die zugrundeliegende Kommunikationsverbindung als zum Betrieb des Kraftfahrzeug gehörig erkannt wurde, ist auch bekannt, welcher Sollentropiewert für diese Kommunikationsverbindung zu erwarten ist. Der Entropiewert der Payloaddaten des aktuellen Datenpakets muss dann in einem vorbestimmten Toleranzintervall (definiert durch den Toleranzwert) liegen, damit das aktuelle Datenpaket auch als gültig im Sinne der erkannten Kommunikationsverbindung erkannt wird. Durch die Verwendung des Toleranzwerts können unterschiedliche Betriebssituationen des Kraftfahrzeugs berücksichtigt werden.

In einer Ausführungsform wird der Entropiewert berechnet, indem eine Summe der logarithmierten Häufigkeitswerte oder der logarithmierten invertierten Häufigkeitswerte berechnet wird. Somit umfasst der Entropiewert die Informationen aus jedem möglichen Zahlenwert, der in den Datensegmenten der Payloaddaten vorkommen kann. So wird durch die Logarithmierung eine Abweichung von dem erwarteten Werteprofil nicht linear bewertet, was die Sensitivität des Detektionsverfahrens im Vergleich zu einer linearen Aufsummierung oder gewichteten Aufsummierung steigert.

In einer Ausführungsform wird aus den Headerdaten ein solches Datenelement oder es werden mehrere solche Datenelemente ausgewählt, die eines oder mehrere oder alle der folgenden Eigenschaften der Kommunikationsverbindung beschreiben: Eine Senderadresse, eine Empfängeradresse, eine Mac-Adresse, eine Payloadlänge (Datenlänge der den Headerdaten folgenden Payload-Nutzdaten des Datenpakets). Diese Datenelemente haben sich als aussagekräftig oder als Beschreibung für eine Kommunikationsverbindung als nützlich erwiesen. Insbesondere eine Kombination mehrerer dieser Datenelemente ist geeignet, die Kommunikationsverbindung eindeutig von jeder anderen Kommunikationsverbindung zu unterscheiden.

Wie bereits ausgeführt, ist das Verfahren im Zusammenhang mit einem paketorientierten Datennetzwerk insbesondere für ein Ethernet-Netzwerk geeignet.

Ein solches Ethernet-Netzwerk ist "zustandslos", weshalb hier die unabhängige Überprüfung einzelner Datenpakete, wie es mit dem Verfahren vorgesehen ist, bereitgestellt werden kann.

Um das erfindungsgemäße Verfahren in einem Kraftfahrzeug durchzuführen, ist durch die Erfindung auch ein Steuergerät für ein Kraftfahrzeug bereitgestellt. Dieses Steuergerät kann an ein Datennetzwerk des Kraftfahrzeugs angeschlossen werden und beispielsweise als ein Sendergerät oder Empfängergerät oder als Router oder als Switch ausgestaltet sein. Das Steuergerät weist eine Prozessorschaltung auf, die dazu eingerichtet ist, eine Ausführungsform des erfindungsgemäßen Verfahrens durchzuführen. Die Prozessorschaltung kann hierzu zumindest einen Mikroprozessor und/oder zumindest einen Mikrocontroller aufweisen. Die Prozessorschaltung kann einen Datenspeicher aufweisen, der Programminstruktionen speichert, die dazu eingerichtet sind, bei Ausführen durch die Prozessorschaltung diese dazu zu veranlassen, die besagte Ausführungsform des erfindungsgemäßen Verfahrens durchzuführen. Der Datenspeicher kann als ein nicht-flüchtiges computerlesbares Speichermedium ausgestaltet sein, beispielsweise als ein Flash-Speicher oder ROM (Read only Memory) oder als SSD.

Ein Kraftfahrzeug ist ebenfalls Bestandteil der Erfindung. Dieses Kraftfahrzeug weist ein Datennetzwerk auf, insbesondere ein Ethernet-Netzwerk, und weist zumindest ein Steuergerät gemäß der Erfindung auf, das an das Datennetzwerk angeschlossen ist. Das erfindungsgemäße Kraftfahrzeug ist bevorzugt als Kraftwagen, insbesondere als Personenkraftwagen oder Lastkraftwagen, ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung einer Ausführungsform des erfindungsgemäßen Kraftfahrzeugs; und
- Fig. 2: eine Skizze zur Veranschaulichung von zwei Prüfroutinen, die auf ein Datenpaket des Datennetzwerks angewendet werden können.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

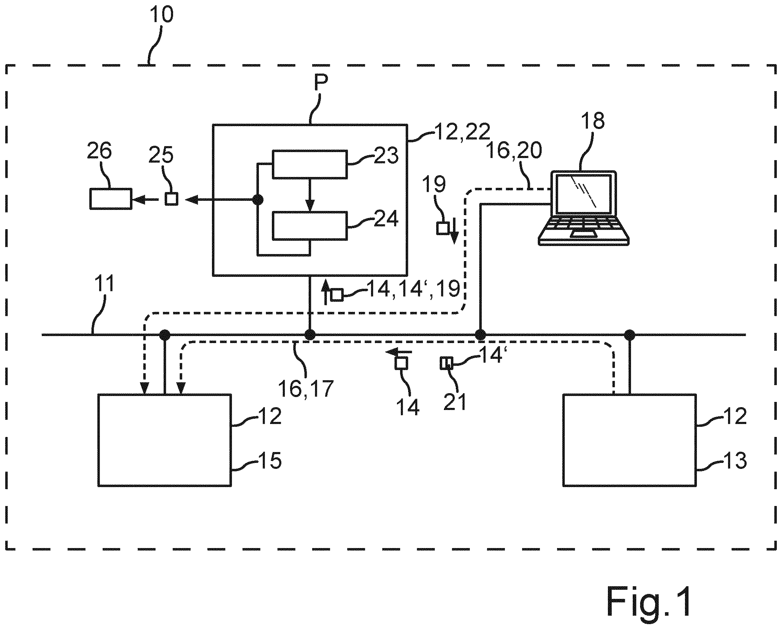

In Fig. 1 ist ein Kraftfahrzeug 10 dargestellt, bei dem es sich um einen Kraftwagen, insbesondere um einen Personenkraftwagen oder Lastkraftwagen, handeln kann. Im Kraftfahrzeug 10 kann ein Datennetzwerk 11 bereitgestellt sein, das einen paketorientierten Datenverkehr ermöglichen kann. Bei dem Datennetzwerk 11 kann es sich insbesondere um ein Ethernet-Netzwerk handeln. An das Datennetzwerk 11 können Steuergeräte 12 des Kraftfahrzeugs angeschlossen sein. Im Folgenden wird davon ausgegangen, dass im Rahmen des Ausführungsbeispiels eines der Steuergeräte 12 ein Sendegerät 13 darstellt, welches Datenpakete 14 an ein Empfängergerät 15 aussendet. Da gemäß der Fahrzeugspezifikation des Kraftfahrzeugs 10, also gemäß dem planmäßigen Betrieb, das Senden der Datenpakete 14 vom Sendegerät 13 zum Empfängergerät 15 vorgesehen ist, handelt es sich bei der resultierenden Kommunikationsverbindung 16 um eine zulässige Kommunikationsverbindung 17. Eine Kommunikationsverbindung 16 ergibt sich aus beispielsweise der Kombination aus Sendergerät 13, Empfängergerät 15 und Kommunikationsinhalt oder Kommunikationstyp der Datenpakete 14, also beispielsweise des Nachrichtentyps in Datenpaketen 14 (beispielsweise Übertragung eines Temperaturwerts oder Drehzahlwerts oder eines bestimmten Steuerbefehls, um nur Beispiele zu nennen). In Fig. 1 ist dargestellt, dass an das Datennetzwerk 11 auch ein zusätzliches Sendegerät 18 angeschlossen sein kann, beispielsweise ein Computer einer Person, die versucht, den Betrieb des Kraftfahrzeugs 10 zu manipulieren. Es kann sich bei dem zusätzlichen Sendegerät 18 auch um ein manipuliertes Steuergerät des Kraftfahrzeugs 10 handeln. Das zusätzliche Sendegerät 18 sendet in dem dargestellten Beispiel ebenfalls Datenpakete 19 an das Empfängergerät 15, wobei sich aber aus der Kombination des Sendegeräts 18 hin zu dem Empfängergerät 15 eine Kommunikationsverbindung 16 ergibt, die eine nicht vorgesehene oder nicht zulässige Kombinationsverbindung 20 darstellt, weil sie nicht Bestandteil der Fahrzeugspezifikation ist. Im Zusammenhang mit dem Sendegerät 13 kann es vorkommen, dass dieses beispielsweise aufgrund einer Manipulation seiner Betriebssoftware auch eines oder mehrere Datenpakete 14' an das Empfängergerät 15 über die zulässige Kommunikationsverbindung 17 sendet, hierbei aber in den Datenpaketen 14' ein unzulässiger Dateninhalt 21 enthalten ist, beispielsweise unzulässige Datenwerte für Drehzahl oder Leistung oder auch Steuerbefehle für das Empfängergerät 15.

Um die unzulässige Kommunikationsverbindung 20 und/oder die manipulierten Datenpakete 14' in dem Datennetzwerk 11 zu detektieren, kann in dem Kraftfahrzeug 10 zumindest ein Steuergerät 12, hier in Fig. 1 das Steuergerät 22, dazu ausgestaltet sein, diesen unautorisierten oder nicht-spezifikationsgemäßen Datenverkehr der Datenpakete 19, 14' zu detektieren. Hierzu kann das Steuergerät 22 den Datenverkehr im Datennetzwerk 11 belauschen oder auslesen, das heißt eine Kopie der übertragenen Datenpakete 14, 14', 19 erzeugen und mittels einer ersten Prüfroutine 23 und einer zweiten Prüfroutine 24 daraufhin überprüfen, ob es sich um Datenpakete einer unzulässigen Kommunikationsverbindung 20 und/oder um manipulierte Datenpakete 14' einer zulässigen Kommunikationsverbindung 17 handelt.

Falls mittels der Prüfroutinen 23, 24 erkannt wird, dass in dem Datennetzwerk 14 zumindest ein manipuliertes Datenpaket 14' und/oder eine nicht-zulässige Kommunikationsverbindung 20 vorhanden ist, so kann durch das Steuergerät 22 ein Detektionssignal 25 erzeugt werden, auf dessen Grundlage in dem Kraftfahrzeug 10 zumindest eine Schutzmaßnahme 26 ausgelöst werden kann, um auf den unautorisierten Datenverkehr zu reagieren. Beispielsweise kann das Kraftfahrzeug 10 angehalten werden oder der Betrieb des Kraftfahrzeugs 10 unterbrochen werden.

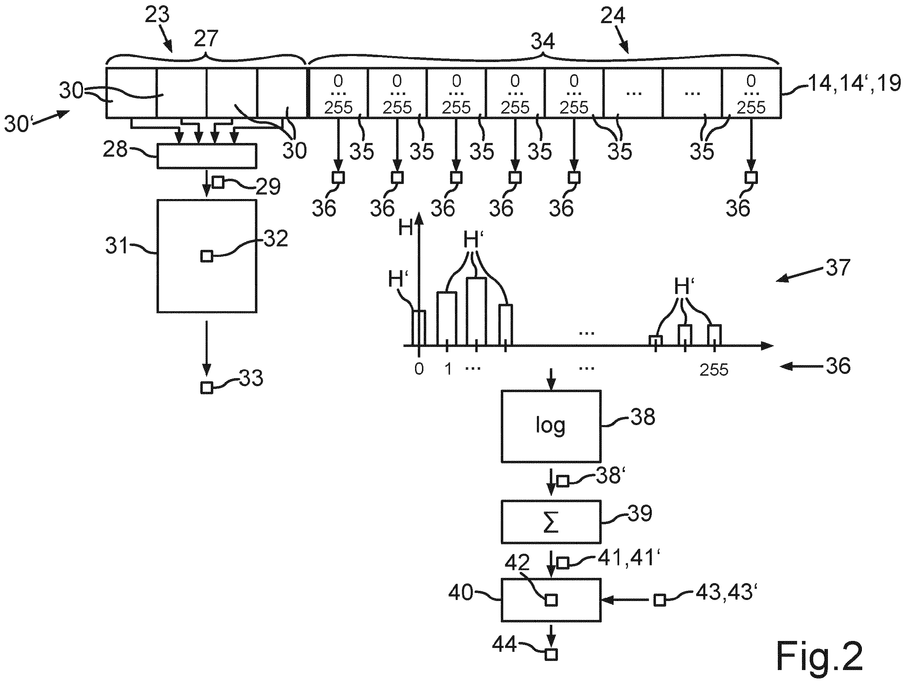

Fig. 2 veranschaulicht mögliche Implementierungen der Prüfroutinen 23, 24.

Dargestellt ist, wie ein einzelnes aus dem Datennetzwerk 11 ausgelesenes Datenpaket bearbeitet werden kann. Hierbei ist zunächst unbekannt, ob es sich um ein zulässiges Datenpaket 14, ein manipuliertes Datenpaket 14' oder ein Datenpaket 19 einer unzulässigen Kommunikationsverbindung 20 handeln.

Mittels der Prüfroutine 23 kann anhand von Headerdaten 27 des Datenpakets mittels einer Prüfsummenfunktion 28 eine Prüfsumme oder ein Hashwert 29 berechnet werden. Hierzu kann aus den Headerdaten 27 eine Auswahl möglicher Datenelemente 30 der Headerdaten 27 erfolgen. Mögliche Datenelemente können sein die beschriebene Senderadresse, Empfängeradresse, Mac-Adresse, Payloadlänge, um nur Beispiele zu nennen. Der berechnete Hashwert 29 oder Prüfsummenwert kann beispielsweise mittels eines Cuckoo-Filters 31 daraufhin überprüft werden, ob der Hashwert 29 oder allgemein Prüfsummenwert ein gültiger Hashwert oder Soll-Hashwert 32 ist, wie er sich ergeben müsste, wenn die Headerdaten 27 eine zulässige Kommunikationsverbindung 17 beschreiben. Ein Filterergebnis 33 beschreibt, ob es eine Übereinstimmung des Hashwerts 29 mit einem möglichen Soll-Hashwert 32 ergibt. Ist dies nicht der Fall, so kann das Detektionssignal 25 erzeugt werden (siehe Fig. 1). Andernfalls kann die Prüfroutine 24 durchgeführt werden. Die Prüfroutine 24 kann auf die Payloaddaten 34 des Datenpakets angewendet werden. Hierbei können die Payloaddaten 34 in Datensegmente 35 unterteilt sein, beispielsweise können die einzelnen Bytes der Payloaddaten betrachtet werden.

In Fig. 2 ist dieser Fall angenommen, sodass für jedes Datensegment 25 (einzelnes Byte) dessen Bits einen Bereich von 0 bis 255 repräsentieren können.

Die Prüfroutine 24 kann vorsehen, dass zu den Payloaddaten 34 die Häufigkeit H der sich ergebenden tatsächlichen Zahlenwerte 36 gezählt wird. Für jeden möglichen Zahlenwert 36 ergibt sich somit ein Häufigkeitswert H'. Hierdurch ergibt sich ein Histogramm 37 der Häufigkeiten H der möglichen Zahlenwerte 36. Es wird also gezählt, wie häufig der Zahlenwert 0, 1, 2, ... 255 jeweils ist.

Auf Grundlage der Häufigkeiten H kann mittels einer Logarithmusfunktion 38 der logarithmierte Werte 38' des jeweiligen Häufigkeitswerts H' oder des invertierten Häufigkeitswerts H' berechnet werden, wobei der Häufigkeitswert 0 besonders behandelt werden kann. Mittels einer Summenfunktion 39 können die Werte zusammengefasst werden, also es kann die Summe der logarithmierten Häufigkeitswerte oder der logarithmierten inversen Häufigkeitswerte berechnet werden. Mittels einer Vergleichsfunktion 40 kann überprüft werden, ob die resultierende Summe 41 um weniger als einen vorbestimmten Toleranzwert 42 von einem Sollentropiewert 43 abweicht, der für anhand der Headerdaten 27 erkannte zusätzliche Kommunikationsverbindung 17 bereitgestellt sein kann. Die Summe 41 stellt ein Werteprofil 41' dar, welches die Payloaddaten 34 repräsentiert. Der Sollentropiewert 43 stellt ein zulässiges Werteprofil 43' dar.

Ein Ergebnis 44 dieser Vergleichsfunktion kann angeben, dass die Summe 41 außerhalb des sich durch den Toleranzwert 42 ergebenden Toleranzintervalls liegt und somit das Detektionssignal 25 erzeugt werden muss. Andernfalls kann das Datenpaket als zulässiges Datenpaket 14 erkannt werden und kein Detektionssignal 25 erzeugt werden oder mittels des Detektionssignals 25 signalisiert werden, dass ein gültiges oder zulässiges Datenpaket, also autorisierter Datenverkehr, erkannt wurde. Dann kann das nächste aus dem Datennetzwerk 11 empfangene Datenpaket analysiert werden.

Für das Durchführen der Prüfroutinen 23, 24 kann das Steuergerät 22 eine Prozessorschaltung P aufweisen.

Die Datenelemente 30 stellen Verbindungsinformationen 30' dar, die die Kommunikationsverbindung 16 beschreiben, entlang welcher das jeweilige Datenpaket übertragen werden soll.

Insgesamt zeigen die Beispiele, wie durch die Erfindung ein spezifikationsbasierter Intrusion-Detection-Ansatz für den Einsatz im Automotive-Ethernet bereitgestellt werden kann.

## Patentansprüche

1. Verfahren zum Detektieren eines unautorisierten Datenverkehrs in einem paketorientierten Datennetzwerk (11) eines Kraftfahrzeugs (10), wobei durch zumindest eine Prozessorschaltung (P) jeweils
zumindest ein Datenpaket (14, 14', 19), das in dem Datennetzwerk (11) übertragen wird, aus dem Datennetzwerk (11) ausgelesen wird und jeweils
Headerdaten (27) des Datenpakets (14, 14', 19) mittels einer ersten Prüfroutine (23) daraufhin überprüft werden, ob durch die Headerdaten (27) beschriebene Verbindungsinformationen (30') eine Kommunikationsverbindung (17) angeben, die für den Betrieb des Kraftfahrzeugs (10) zugelassen ist, wobei einer Fahrzeugspezifikation entnommen ist, welche Kommunikationsverbindung (17) dabei zugelassen ist, sodass anhand der Headerdaten (27) die Prozessorschaltung (P) erkennt, ob das aktuell ausgelesene Datenpaket (14, 14', 19) zu einer für den Betrieb des Kraftfahrzeugs (10) zugelassenen Kommunikationsverbindung (17) gehört, indem die erste Prüfroutine (23) umfasst, dass zumindest ein vorbestimmtes Datenelement (30) der Headerdaten (27) ausgewählt wird und ein Hashwert (29) über jedes ausgewählte Datenelement (30) berechnet wird und überprüft wird, ob der berechnete Hashwert (29) mit einem Sollhashwert (32) übereinstimmt, wobei für jede zugelassen Kommunikationsverbindung (17) jeweils zumindest ein Sollhashwert (32) in einem Datenspeicher bereitgehalten wird,
und die erste Prüfroutine (23) umfasst, dass der Hashwert (29) mittels eines Cuckoo-Filters (31) und/oder mittels eines Bloom-Filters geprüft wird, und
falls das Datenpaket (14, 14', 19) als zu einer zugelassenen Kommunikationsverbindung (17) gehörig erkannt wird, Payloaddaten (34) des Datenpakets (14, 14', 19) mittels einer zweiten Prüfroutine (24) daraufhin überprüft werden, ob Datenwerte (36) der Payloaddaten (34) ein Werteprofil (34') aufweisen, das für die Kommunikationsverbindung (17) vorgesehen ist, wobei das Werteprofil (41') umfasst, dass die Payloaddaten (34) in Datensegmente (35) eingeteilt werden und für jedes Datensegment (35) ein durch Bits dieses Datensegments (35) definierter Zahlenwert (36) ermittelt wird und ein jeweiliger Häufigkeitswert (H') einer absoluten oder relativen Häufigkeit (H) der in den Datensegmenten (35) insgesamt vorkommenden Zahlenwerte (36) gezählt wird, und
falls einer der Fälle eintritt, dass für das Datenpaket (14,14', 19) eine zugelassene Kommunikationsverbindung (17) oder ein zugelassenes Werteprofil (43') fehlt, ein Detektionssignal (25) erzeugt wird, welches das Datenpaket (14, 14', 19) als unautorisierten Datenverkehr signalisiert.

2. Verfahren nach Anspruch 1, wobei das Werteprofil (41) umfasst, dass für das Datenpaket (14, 14', 19) anhand der Häufigkeitswerte (H') der Zahlenwerte (36) ein Entropiewert (41) berechnet wird und für jede zugelassene Kommunikationsverbindung (17) ein jeweiliger spezifischer Sollentropiewert (43) in einem Datenspeicher bereitgehalten wird und nur falls der berechnete Entropiewert (41) von dem Sollentropiewert (43) derjenigen Kommunikationsverbindung (16), zu welcher das Datenpaket (14, 14', 19) gehört, um weniger als einen vorbestimmten Toleranzwert (42) abweicht, das Werteprofil (41') als zulässig erkannt wird.

3. Verfahren nach Anspruch 2, wobei der Entropiewert (41) berechnet wird, indem eine Summe (39) der logarithmierten Häufigkeitswerte oder der logarithmierten invertierten Häufigkeitswerte (38') berechnet wird.

4. Verfahren nach einem der vorhergehenden Ansprüche, wobei aus den Headerdaten (27) zumindest eines von solchen Datenelementen (30) ausgewählt werden, die eines oder mehrere oder alle der folgenden Eigenschaften der Kommunikationsverbindung (16) beschreiben: eine Senderadresse, eine Empfängeradresse, eine MAC-Adresse, eine Payloadlänge.

5. Verfahren nach einem der vorhergehenden Ansprüche, wobei das Datennetzwerk (11) ein Ethernet-Netzwerk ist.

6. Steuergerät (22) für ein Kraftfahrzeug (10), wobei das Steuergerät (22) eine Prozessorschaltung (P) aufweist, die dazu eingerichtet ist, ein Verfahren nach einem der vorhergehenden Ansprüche durchzuführen.

7. Kraftfahrzeug (10) mit einem Datennetzwerk (11) und mit zumindest einem Steuergerät (22) nach Anspruch 6, das an das Datennetzwerk (11) angeschlossen ist.

## Claims

1. Method for detecting unauthorised data traffic in a packet-oriented data network (11) of a motor vehicle (10), wherein at least one data packet (14, 14', 19) respectively, which is transmitted in the data network (11), is read out of the data network (11) by at least one processor circuit (P), and header data (27) of the data packet (14, 14', 19) are checked respectively by means of a first test routine (23) to determine whether connection information (30') described by the header data (27) indicates a communication connection (17) which is approved for the operation of the motor vehicle (10), wherein a vehicle specifiation is taken, as a basis which communication connection (17) is authorised, so that the processor circuit (P) detects on the basis of the header data (27) whether the currently read data packet (14, 14', 19) belongs to a communication connection (17) authorised for the operation of the motor vehicle (10), in that the first test routine (23) includes that at least one predetermined data element (30) of the header data (27) is selected and a hash value (29) is calculated via each selected data element (30) and a check is carried out as to whether the calculated hash value (29) corresponds to a nominal hash value (32), wherein for each authorised communication connection (17) respectively at least one nominal hash value (32) is kept available in a data memory,
and the first test routine (23) comprises checking the hash value (29) by means of a cuckoo filter (31) and/or by means of a bloom filter, and
if the data packet (14, 14', 19) is recognised as belonging to an authorised communication link (17), payload data (34) of the data packet (14, 14', 19) are checked by means of a second test routine (24) to determine whether data values (36) of the payload data (34) have a value profile (34') which is provided for the communication link (17), wherein the value profile (41') comprises that the payload data (34) are divided into data segments (35) and for each data segment (35) a numerical value (36) defined by bits of this data segment (35) is determined and a respective frequency value (H') of an absolute or relative frequency (H) of the numerical values (36) occurring in total in the data segments (35) is counted, and
if it occurs that an authorised communication connection (17) or an authorised value profile (43') is missing for the data packet (14, 14', 19), a detection signal (25) is generated which signals the data packet (14, 14', 19) to be unauthorised data traffic.

2. Method according to claim 1, wherein the value profile (41) comprises that an entropy value (41) is calculated for the data packet (14, 14', 19) on the basis of the frequency values (H') of the numerical values (36) and a respective specific nominal entropy value (43) is kept available in a data memory for each authorised communication connection (17), and the value profile (41') is only recognised as permissible if the calculated entropy value (41) differs from the nominal entropy value (43) of that communication connection (16), to which the data packet (14, 14', 19) belongs, by less than a predetermined tolerance value (42).

3. Method according to claim 2, wherein the entropy value (41) is calculated by calculating a sum (39) of the logarithmised frequency values or the logarithmised inverted frequency values (38').

4. Method according to any of the preceding claims, wherein from the header data (27) at least one of such data elements (30) is selected, which describe one or more or all of the following properties of the communication connection (16): a sender address, a receiver address, a MAC address, a payload length.

5. Method according to any of the preceding claims, wherein the data network (11) is an Ethernet network.

6. Control device (22) for a motor vehicle (10), wherein the control device (22) has a processor circuit (P) which is configured to perform a method according to any of the preceding claims.

7. Motor vehicle (10) with a data network (11) and with at least one control device (22) according to claim 6, which is connected to the data network (11).

## Revendications

1. Procédé de détection d'un trafic de données non autorisé dans un réseau de données orienté paquets (11) d'un véhicule automobile (10), dans lequel au moins un paquet de données (14, 14', 19), qui est transmis dans le réseau de données (11), est lu dans le réseau de données (11) par l'intermédiaire d'au moins un circuit de processeur (P) et des données d'en-tête (27) du paquet de données (14, 14', 19) sont vérifiées au moyen d'une première routine de contrôle (23) pour déterminer si des informations de liaison (30') décrites par les données d'en-tête (27) indiquent une liaison de communication (17) qui est autorisée pour le fonctionnement du véhicule automobile (10), dans lequel une spécification de véhicule indique quelle liaison de communication (17) est alors autorisée, de sorte qu'à l'aide des données d'en-tête (27), le circuit de processeur (P) reconnaît si le paquet de données (14, 14', 19) actuellement lu appartient à une liaison de communication (17) autorisée pour le fonctionnement du véhicule automobile (10), en ce que la première routine de contrôle (23) comprend le fait qu'au moins un élément de données (30) prédéterminé des données d'en-tête (27) est sélectionné et une valeur de hachage (29) est calculée sur chaque élément de données (30) sélectionné et il est vérifié si la valeur de hachage (29) calculée correspond à une valeur de hachage de consigne (32), dans lequel au moins une valeur de hachage de consigne (32) est respectivement tenue à disposition dans une mémoire de données pour chaque liaison de communication (17) autorisée,
et la première routine de contrôle (23) comprend le fait que la valeur de hachage (29) est contrôlée au moyen d'un filtre Cuckoo (31) et/ou au moyen d'un filtre Bloom, et
si le paquet de données (14, 14', 19) est reconnu comme appartenant à une liaison de communication (17) autorisée, des données de charge utile (34) du paquet de données (14, 14', 19) sont vérifiées au moyen d'une seconde routine de vérification (24) pour déterminer si des valeurs de données (36) des données de charge utile (34) présentent un profil de valeurs (34') qui est prévu pour la liaison de communication (17), dans lequel le profil de valeurs (41') comprend le fait que les données de charge utile (34) sont divisées en segments de données (35) et que, pour chaque segment de données (35), une valeur numérique (36) définie par des bits de ce segment de données (35) est déterminée et une valeur de fréquence respective (H') d'une fréquence absolue ou relative (H) des valeurs numériques (36) apparaissant au total dans les segments de données (35) est comptée, et
si l'un des cas se présente, en ce qu'il manque pour le paquet de données (14, 14', 19) une liaison de communication autorisée (17) ou un profil de valeurs autorisé (43'), un signal de détection (25) est généré, lequel signale le paquet de données (14, 14', 19) en tant que trafic de données non autorisé.

2. Procédé selon la revendication 1, dans lequel le profil de valeurs (41) comprend le fait qu'une valeur d'entropie (41) pour le paquet de données (14, 14', 19) est calculée à l'aide des valeurs de fréquence (H') des valeurs numériques (36) et que pour chaque liaison de communication (17) autorisée, une valeur d'entropie de consigne (43) spécifique respective est tenue à disposition dans une mémoire de données et le profil de valeurs (41') est reconnu comme autorisé uniquement si la valeur d'entropie (41) calculée s'écarte de la valeur d'entropie de consigne (43) de cette liaison de communication (16), à laquelle appartient le paquet de données (14, 14', 19), de moins d'une valeur de tolérance (42) prédéterminée.

3. Procédé selon la revendication 2, dans lequel la valeur d'entropie (41) est calculée en ce qu'une somme (39) des valeurs de fréquence logarithmiques ou des valeurs de fréquence inversées logarithmiques (38') est calculée.

4. Procédé selon l'une quelconque des revendications précédentes, dans lequel parmi les données d'en-tête (27) est sélectionné au moins un de tels éléments de données (30) qui décrivent une ou plusieurs ou toutes les propriétés suivantes de la liaison de communication (16) : une adresse d'émetteur, une adresse de récepteur, une adresse MAC, une longueur de charge utile.

5. Procédé selon l'une quelconque des revendications précédentes, dans lequel le réseau de données (11) est un réseau Ethernet.

6. Dispositif de commande (22) pour un véhicule automobile (10), dans lequel le dispositif de commande (22) présente un circuit de processeur (P) qui est configuré pour mettre en œuvre un procédé selon l'une quelconque des revendications précédentes.

7. Véhicule automobile (10) avec un réseau de données (11) et avec au moins un dispositif de commande (22) selon la revendication 6, qui est raccordé au réseau de données (11).
